# DEMANDE DE BREVET EUROPEEN

(11) **EP 2 400 751 A1**
(43) Date de publication de la demande: **28.12.2011**
(21) Numéro de dépôt: 11168457.7
(22) Date de dépôt: 01.06.2011
(51) Int. Cl.: H04N 7/173, H04N 7/14

(54) **Procédé de mise en communication d'utilisateurs d'équipements audiovisuels automatiquement identifiés comme membres d'une même communauté**

(30) Priorité: 03.06.2010 FR 1054365
(71) Demandeur: FRANCE TELECOM, 75015 Paris (FR)
(72) Inventeur: LE HUEROU, Emmanuel, 22700 Saint Quay Perros (FR); GODEST, Jean-Pierre, 22300 Lannion (FR)
(74) Mandataire: Saint-Marc-Etienne, Christophe Andréas

(57) **Abrégé**

La présente invention concerne un procédé de communication entre un premier utilisateur USR1 d'un équipement de restitution de flux audiovisuels TV1 d'un premier type et au moins un utilisateur USR2 d'un équipement de restitution distant TV2.

Le procédé selon l'invention inclut une étape d'émission à destination de l'équipement distant, d'informations de situation Infs relatives à un contexte dans lequel se trouve un équipement d'un deuxième type UT1 dont dispose ledit premier utilisateur USR1 lesdites informations de situation Infs incluant des données (IdPg,Dat) relatives à un mode de fonctionnement dans lequel se trouve l'équipement du premier type TV1.

L'invention permet ainsi de rendre complémentaires des activités de communication communautaire et de suivi de programmes audiovisuels sur un téléviseur, sans pour autant générer de risque de confusion quant à l'identité de l'utilisateur.

## Description

### 1. Domaine de l'invention

L'invention concerne un procédé de communication entre un premier utilisateur d'un équipement de restitution de flux audiovisuels d'un premier type et des utilisateurs d'équipements distants de restitution de flux audiovisuels.

De tels procédés sont couramment utilisés dans le domaine des communications interpersonnelles, en particulier dans des applications dites communautaires permettant à un utilisateur de diffuser des informations à destination d'une communauté de personnes avec lesquelles cet utilisateur présente des points communs ou qui présentent des caractéristiques personnelles conformes à des critères préalablement définis par ledit utilisateur.

### 2. Art antérieur

Diverses applications communautaires sont proposées au public depuis quelques années et connaissent un engouement croissant, dont les plus connues sont les applications MySpace ou Facebook (marques déposées). Ces applications, initialement destinées à des utilisateurs munis d'ordinateurs personnels connectés entre eux grâce à un réseau de télécommunication de type Internet, ont été progressivement rendues accessibles par l'intermédiaire d'autres terminaux aptes à être connectés à un ou plusieurs réseaux de télécommunication, tels des téléphones mobiles et plus récemment des téléviseurs. Ainsi, une demande de brevet US 2009/0293079 décrit un système de communication permettant à différents utilisateurs d'appareils de télévision faisant partie d'une même communauté de bénéficier de fonctions offertes par une application communautaire tout en suivant un programme audiovisuel. De tels utilisateurs peuvent par exemple se voir communiquer des informations de présence et d'activité relatives aux membres de leur communauté, par exemple sous forme de vignettes incrustées dans l'image, auxquelles peuvent être accolées des boîtes de dialogue permettant de dialoguer en messagerie instantanée mais aussi d'afficher de courts messages descriptifs d'évènements se rapportant aux membre de la communauté.

Ainsi, un utilisateur pourra savoir en temps réel si d'autres membres d'une communauté à laquelle il appartient sont en train de suivre sur leur téléviseur le programme audiovisuel suivi par l'utilisateur, ces différents membres de la communauté pouvant en outre dialoguer les uns avec les autres au moyen d'un service de messagerie instantanée intégré à l'image affichée sur le téléviseur.

### 3. Objectifs de l'invention

Le système de télécommunication connu permet de rendre complémentaire des activités de communication communautaires et de suivi de programmes audiovisuels qui étaient encore tout récemment antagonistes. Une telle complémentarité est obtenue en faisant converger ces deux activités par intégration de flux de données représentatives des activités de communication communautaires dans des flux de données représentatives des programmes audiovisuels traditionnellement restitués par un téléviseur.

Toutefois, une telle intégration n'est pas sans faire apparaître de nouvelles difficultés. En effet, alors qu'un ordinateur personnel ou un téléphone mobile est par nature un terminal destiné à être utilisé par une seule personne, il n'en va pas de même pour un téléviseur qui est destiné de par sa grande surface d'affichage à être utilisé de façon collective. Une application de communication communautaire pourra ainsi aisément identifier un utilisateur d'un ordinateur personnel pour, entre autres possibilités, gérer son état de présence, ou encore identifier cet utilisateur en tant qu'émetteur d'un message instantané ou d'un commentaire concernant un programme en cours de suivi par cet utilisateur. A l'inverse, dans le système de télécommunication connu, lorsque plusieurs spectateurs suivent un même programme audiovisuel sur un téléviseur, l'application de communication communautaire ne pourra discriminer entre ces différents spectateurs pour gérer un état de présence ou tracer la source de messages. Pour ce faire, l'application communautaire associera une identité d'utilisateur prédéfini à chaque téléviseur, et tout utilisateur d'un tel téléviseur sera réputé être l'utilisateur prédéfini.

Une telle mesure donne naissance à des risques de confusion, car une personne tierce utilisant le téléviseur associé à l'utilisateur prédéfini sera perçue par d'autres membres de la communauté de l'utilisateur prédéfini comme étant cet utilisateur, induisant ainsi en erreur ces autres membres. Dans une telle situation, ces autres membres risquent de faire à cette personne tierce des confidences qu'elles ne lui auraient pas faites s'ils ne l'avaient pas prise pour l'utilisateur prédéfini. Par ailleurs, dans cette situation, les informations de présence relatives à l'utilisateur prédéfini qui seront transmises aux autres membres de la communauté pourront être inexactes, en particulier si l'utilisateur prédéfini ne se trouve pas en compagnie de la personne tierce.

Un autre inconvénient du système connu apparaît justement dans une situation où l'utilisateur prédéfini suit sur son téléviseur un programme audiovisuel en compagnie d'une ou plusieurs personnes tierces. Dans une telle situation, toutes ses activités de communication communautaires seront portées à la connaissance de ces personnes tierces, à moins qu'il ne désactive purement et simplement la fonctionnalité de communication communautaire par souci de discrétion quant à ses propres activités communautaires ainsi qu'à celles des autres membres de sa communauté, cette dernière solution n'étant bien sûr pas satisfaisante.

L'invention apporte une solution qui ne présente pas les inconvénients décrits plus haut, en proposant un procédé permettant de rendre complémentaires des activités de communication communautaire et de suivi de programmes audiovisuels sur un téléviseur, sans pour autant qu'une utilisation collective dudit téléviseur ne donne naissance à des risques de confusion quant à l'identité de la personne dont l'activité télévisuelle sert de référence pour déterminer son appartenance à une communauté.

### 4. Exposé de l'invention

En effet, selon un aspect fonctionnel, l'invention concerne un procédé conforme au paragraphe introductif, caractérisé en ce qu'il inclut une étape d'émission automatique à destination d'au moins l'un desdits équipements distants, d'informations de situation relatives à un contexte dans lequel se trouve un équipement d'un deuxième type propre audit premier utilisateur, lesdites informations de situation incluant des données relatives à un mode de fonctionnement dans lequel se trouve l'équipement du premier type.

Les informations de situation sont spécifiques à l'équipement du deuxième type qui est lui-même propre à l'utilisateur, de sorte qu'elles sont représentatives du contexte dans lequel se trouve cet utilisateur, quand bien même il se trouverait en compagnie d'autres personnes. Ces informations de situation sont donc suffisamment fiables pour être utilisées dans des applications de communication communautaires. Par exemple, ces informations de situation peuvent inclure un identifiant de programme en cours de restitution par l'équipement du premier type, auquel cas un gestionnaire de l'application de communication communautaire pourra automatiquement créer ou mettre à jour dynamiquement une communauté de spectateurs dudit programme. Les informations de situation pourront également inclure des données de localisation qui permettront au gestionnaire de l'application de communication communautaire de gérer des communautés sur la base de distances physiques séparant leurs membres. On pourra ainsi par exemple obtenir une création automatique d'une communauté de spectateurs dont l'éloignement les uns par rapport aux autres sera inférieur à une distance prédéterminée.

Selon un mode de mise en oeuvre particulier de l'invention, un procédé tel que décrit plus haut inclut en outre une étape de restitution, sur au moins un équipement de restitution de flux audiovisuels distant, d'informations saisies par le premier utilisateur au moyen de l'équipement du deuxième type.

Ce mode de mise en oeuvre permet en quelque sorte de déporter, sur le terminal du deuxième type, des fonctionnalités propres à une application de communication communautaire qui sont localisées dans l'équipement du deuxième type dans le système connu. Ainsi, l'utilisateur pourra communiquer en toute discrétion avec les membres de sa communauté *via* son équipement du deuxième type, qui pourra par exemple être un téléphone mobile.

Dans l'hypothèse où l'équipement distant est l'équipement d'un membre de la communauté du premier utilisateur qui est en train de regarder le même programme, voire l'équipement d'un membre d'une communauté de gens qui regardent le même programme que celui regardé par le premier utilisateur, les informations saisies par le premier utilisateur pourront être des commentaires portant sur ce programme.

Si l'utilisateur de l'équipement distant est membre de la communauté du premier utilisateur mais ne regarde pas le même programme, les informations saisies par le premier utilisateur pourront véhiculer une indication selon laquelle le premier utilisateur regarde tel autre programme, voire une invitation à changer de programme en vue de vivre ensemble une même expérience audiovisuelle.

Selon une variante de ce mode de mise en oeuvre, dans laquelle l'équipement du deuxième type est muni d'un microphone, les informations saisies par le premier utilisateur en vue de leur restitution sur un équipement distant incluent des signaux sonores.

Une telle variante permettra par exemple au premier utilisateur d'interpeller vocalement un utilisateur distant, le deuxième équipement transmettant alors à cette fin un signal de parole qui sera intégré dans le flux audiovisuel destiné à être restitué à l'utilisateur distant selon un mode de fonctionnement connu de l'homme du métier sous l'appellation anglo-saxonne « Push-to-talk ».

Selon un autre mode de mise en oeuvre de l'invention, un procédé tel que décrit plus haut inclut en outre une étape de restitution, sur ledit équipement de restitution du premier type, d'informations en cours de restitution sur l'équipement du deuxième type.

Ce mode de mise en oeuvre permettra au premier utilisateur de partager ses activités de communication communautaire avec une ou plusieurs personnes se trouvant en sa compagnie, tout en garantissant au premier utilisateur un contrôle sur ce qui est affiché. Il suffira au premier utilisateur d'interrompre la restitution sur l'équipement du premier type pour reprendre en toute discrétion ses activités de communication communautaire.

Selon un aspect matériel, l'invention concerne également un système de télécommunication incluant un équipement de restitution de flux audiovisuels d'un premier type et des équipements distants de restitution de flux audiovisuels, caractérisé en ce qu'il inclut des moyens d'émission automatique à destination d'au moins l'un desdits équipements distants, d'informations de situation relatives à un contexte dans lequel se trouve un équipement d'un deuxième type associé à l'équipement du premier type, lesdites informations de situation incluant des données relatives à un mode de fonctionnement dans lequel se trouve l'équipement du premier type.

Selon un autre aspect matériel, l'invention concerne également un terminal de communication associé à un premier équipement de restitution de flux audiovisuels et incluant des moyens d'émission à destination d'au moins un équipement distant, d'informations de situation relatives à un contexte dans lequel se trouve le terminal, lesdites informations de situation incluant des données relatives à un mode de fonctionnement dans lequel se trouve le premier équipement de restitution de flux audiovisuels.

Selon un autre aspect matériel, l'invention concerne également un programme d'ordinateur caractérisé en ce qu'il comprend des instructions de code de programme pour la mise en oeuvre d'une étape d'émission incluse dans un procédé tel que décrit plus haut lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 est un diagramme fonctionnel qui représente un système de communication dans lequel l'invention est mise en oeuvre ; et
- la figure 2 est un diagramme fonctionnel qui illustre une variante de mise en oeuvre de l'invention.

### 6. Description d'un mode de réalisation de l'invention

### 6.1 Principe général

Le principe général de l'invention repose sur l'utilisation d'un terminal personnel propre à un utilisateur pour mettre en oeuvre des fonctionnalités de communication communautaires relatives à un ou plusieurs programmes audiovisuels simultanément suivis par cet utilisateur. L'invention permet ainsi de rendre complémentaires des activités de communication communautaire et de suivi de programmes audiovisuels sur un téléviseur, sans pour autant générer de risque de confusion quant à l'identité de l'utilisateur ni provoquer de divulgation intempestive des activités communautaires de cet utilisateur.

### 6.2 Description d'un mode de réalisation

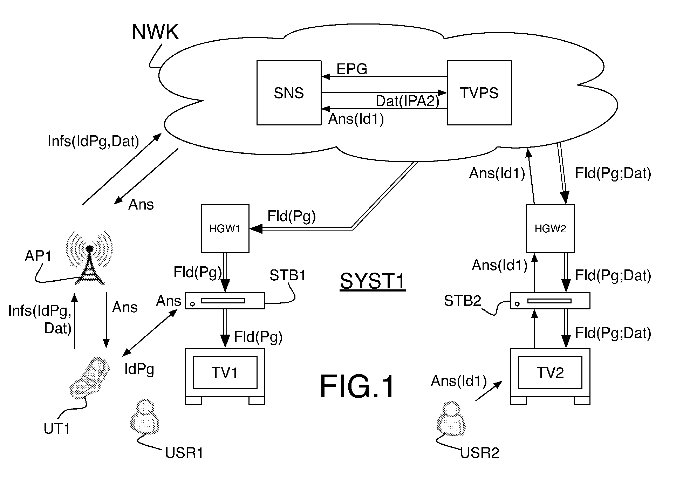

La **FIG.1** illustre un premier mode de mise en oeuvre de l'invention au sein d'un premier système de télécommunication SYST1, qui permet d'établir une communication entre un premier utilisateur USR1 d'un équipement de restitution de flux audiovisuels d'un premier type, ici un premier téléviseur TV1 et au moins un deuxième utilisateur USR2 d'un équipement distant de restitution de flux audiovisuels, ici un deuxième téléviseur TV2.

Dans l'exemple de mise en oeuvre décrit ici, les premier et deuxième téléviseurs TV1 et TV2 sont relié à un réseau de communication de type Internet via des premier et deuxième boîtiers-décodeurs STB1 et STB2 et des première et deuxième passerelles domestiques HGW1 et HGW2. Dans le présent cas de figure, les premier et deuxième téléviseurs restituent initialement tous deux un même flux Fld(Pg) de données audiovisuelles représentatives d'un même programme Pg diffusé par un serveur de programmes de télévision TVPS.

Chacune des passerelles domestiques HGW1 et HGW2 est en outre destinée à assurer la gestion d'un réseau local d'équipements de communication auquel peuvent appartenir, outre un boîtier-décodeur et un téléviseur, des ordinateurs personnels ou encore des tablettes interactives susceptibles de restituer des flux audiovisuels identiques à ceux restitués sur les premier et deuxième téléviseurs TV1 et TV2.

Les premier et deuxième utilisateurs USR1 et USR2 font ici partie d'une communauté d'utilisateurs gérée par un serveur de réseau social SNS, lequel a préalablement mémorisé tout ou partie d'un guide électronique de programme EPG qui lui a été fourni par le serveur de programmes de télévision TVPS. Un tel guide électronique de programme comporte en particulier tous les identifiants de programme en cours de diffusion, dont l'identifiant IdPg du programme Pg.

Le système SYST1 ici décrit inclut des moyens d'émission, à destination du deuxième téléviseur TV2, d'informations de situation Infs relatives à un contexte dans lequel se trouve un équipement d'un deuxième type dont dispose ledit premier utilisateur USR1, ici un premier terminal mobile UT1, lesdites informations de situation Infs incluant des données relatives à un mode de fonctionnement dans lequel se trouve le premier téléviseur TV1. En particulier, les informations de situation Infs incluent avantageusement un identifiant IdPg d'un programme Pg en cours de restitution sur le premier téléviseur TV1.

A cet effet, le premier terminal mobile UT1 et le premier boîtier-décodeur STB1 incluent des moyens pour communiquer l'un avec l'autre, par exemple par transmission via une liaison Bluetooth d'échanges conformes au protocole « SNMP » (abréviation de l'expression anglaise bien connue de l'homme du métier « Simple Network Management Protocol »). De la sorte, le premier boîtier-décodeur STB1 tient le premier terminal mobile UT1 informé de l'identité IdPg du programme Pg en cours de restitution par le premier téléviseur. Le premier terminal mobile UT1 peut ainsi émettre un signal d'information Infs(IdPg,Dat) véhiculant l'identifiant IdPg du programme Pg en cours de restitution par le premier téléviseur TV1, lequel signal d'information Infs(IdPg,Dat) est transmis au serveur de réseau social SNS *via* un point d'accès AP1 au réseau NWK.

Selon une variante, non représentée sur la figure, du mode de fonctionnement décrit ci-dessus, dans laquelle le premier terminal mobile UT1 et le premier boîtier-décodeur STB1 n'incluent pas de moyens pour communiquer l'un avec l'autre, le serveur de réseau social SNS pourra opérer un recoupement entre des adresses Internet attribuées au premier terminal mobile UT1, d'une part, et au premier boîtier-décodeur STB1, d'autre part, afin d'en déduire dans quel contexte se trouve le premier terminal mobile UT1 et en particulier l'identité IdPg du programme en cours de restitution par le premier téléviseur TV1 relié au boîtier-décodeur STB1.

Connaissant le contexte dans lequel se trouve le premier terminal UT1, et donc l'utilisateur USR1 de ce terminal, le serveur de réseau social SNS peut créer ou mettre à jour diverses communautés d'utilisateurs, par exemple une communauté de spectateurs du programme Pg à laquelle le premier utilisateur USR1 pourra ainsi être automatiquement ajouté, ou encore une communauté dont des membres, préalablement choisis sur la base d'autres critères définis par le premier utilisateur USR1, pourront se voir notifier que le premier utilisateur USR1 est en train de suivre le programme Pg.

A cet effet, le serveur de réseau social SNS transmet au serveur de diffusion de programmes TVPS un signal de données Dat(IPA2) incluant dans cet exemple une adresse IPA2 préalablement mémorisée par le serveur de réseau social SNS en tant qu'adresse Internet du deuxième boîtier-décodeur STB2. Le serveur de diffusion de programmes TVPS extrait alors des données Dat depuis le signal Dat(IPA2) émis par le serveur de réseau social SNS et les intègre, par exemple par multiplexage, dans le flux de données audiovisuelles Fld(Pg;Dat) qu'il envoie à destination du deuxième boîtier-décodeur STB2. Ainsi, les données Dat seront restituées au deuxième utilisateur USR2 au moyen de son téléviseur TV2 sous une forme très ergonomique pour celui-ci puisqu'il n'aura aucun effort particulier à faire pour en prendre connaissance.

Les donnés Dat pourront être représentatives d'une simple notification du type « USR1 suit en ce moment le programme Pg » générée automatiquement par le serveur de réseau social SNS, mais de telles données Dat pourront aussi avoir été saisies par le premier utilisateur USR1 au moyen du premier terminal mobile UT1. Ce mode de mise en oeuvre permet en quelque sorte de déporter, sur le terminal mobile UT1, les fonctionnalités propres à une application de communication communautaire qui sont localisées dans le téléviseur dans le système connu. Grâce à l'invention, le premier utilisateur USR1 peut communiquer en toute discrétion avec les membres de sa communauté *via* son terminal mobile UT1.

Les données Dat saisies par le premier utilisateur USR1 pourront être représentatives de commentaires portant sur le programme Pg. Dans une situation non-représentée ici où le deuxième utilisateur USR2 est membre de la communauté du premier utilisateur USR1 mais ne regarde pas le même programme Pg, les données Dat saisies par le premier utilisateur USR1 pourront véhiculer une indication selon laquelle le premier utilisateur USR1 regarde le programme Pg, voire une invitation pour le deuxième utilisateur USR2 à changer de programme en vue de vivre avec le premier utilisateur USR1 une même expérience audiovisuelle.

Dans le cas de figure représenté ici, les données Dat saisies par le premier utilisateur USR1 en vue de leur restitution sur un équipement distant incluent des signaux sonores. Ceci permettra au premier utilisateur USR1 d'interpeller vocalement le deuxième utilisateur USR2, le deuxième téléviseur restituant alors à cette fin un signal de parole qui sera intégré dans le flux audiovisuel destiné au deuxième utilisateur USR2 selon un mode de fonctionnement connu de l'homme du métier sous l'appellation anglo-saxonne « Push-to-talk ».

La présente figure illustre un cas d'usage où le deuxième utilisateur USR2 émet un message de réponse Ans en réaction aux données Dat qui lui ont été restituées sur le deuxième téléviseur TV2, par exemple un message de bienvenue ou une réponse à un commentaire précédent. Dans ce mode de mise en oeuvre de l'invention, le deuxième utilisateur USR2 ne dispose pas lui-même d'un terminal mobile apte à communiquer directement avec le serveur de réseau social SNS. Ce deuxième utilisateur USR2 pourra alors utiliser une télécommande, non-représentée ici, pour pointer sur une représentation graphique du premier utilisateur USR1, par exemple un avatar, afin de signifier au deuxième boîtier-décodeur STB2 qu'un message de réponse Ans(Id1) doit être envoyé à un utilisateur portant un identifiant Id1 associé à ladite représentation graphique. Ce message de réponse Ans(Id1) est alors transmis au serveur de réseau social SNS *via* la deuxième passerelle domestique HGW2 et le serveur de programmes TVPS. Le serveur de réseau social SNS déduit de l'identifiant Id1 l'adresse du premier terminal mobile UT1 et lui fait parvenir le message de réponse Ans via le point d'accès AP1.

Dans le mode de mise en oeuvre décrit ici, la liaison entre le premier terminal mobile UT1 et le premier boîtier-décodeur STB1 est bidirectionnelle, ce qui permet une restitution, sur le premier téléviseur TV1, d'informations en cours de restitution sur le premier terminal mobile UT1, comme par exemple la réponse Ans qui lui a été envoyée par le deuxième utilisateur USR2. Dans un autre mode de mise en oeuvre, le serveur de réseau social SNS pourra avoir préalablement mémorisé une adresse propre au premier boîtier-décodeur STB1 en vue de lui envoyer directement le message de réponse Ans si le premier utilisateur a autorisé l'activation d'une telle voie de communication.

Ces modes de mise en oeuvre permettent au premier utilisateur USR1 de partager ses activités de communication communautaire avec une ou plusieurs personnes se trouvant en sa compagnie, tout en garantissant au premier utilisateur USR1 un contrôle sur ce qui est affiché par le premier téléviseur TV1. Il suffira au premier utilisateur USR1 d'interrompre la restitution sur l'équipement du premier type pour reprendre en toute discrétion ses activités de communication communautaire. Une telle interruption sera aisément réalisée par simple désactivation de la liaison bidirectionnelle entre le premier terminal mobile UT1 et le premier boîtier-décodeur STB1, ou bien par désactivation d'une éventuelle voie de communication directe entre le serveur de réseau social SNS et le premier boîtier-décodeur STB1.

### 6.3 Description d'une variante de réalisation

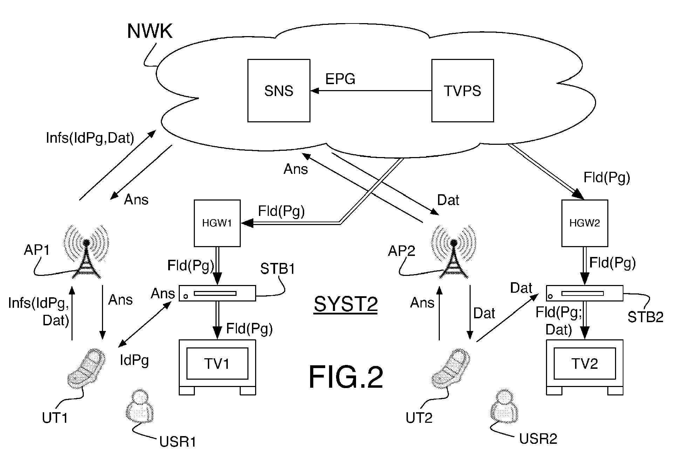

La **FIG.2** illustre un deuxième mode de mise en oeuvre de l'invention au sein d'un deuxième système de télécommunication SYST2 dans lequel le deuxième utilisateur est lui muni d'un deuxième terminal mobile UT2 apte à échanger des données avec le serveur de réseau social SNS via un deuxième point d'accès AP2. En particulier, ce deuxième terminal mobile UT2 ayant une adresse connue du serveur de réseau social SNS, il pourra recevoir de la part de ce dernier les données Dat qui devaient transiter par le serveur de programmes TVPS dans le cas de figure précédent. Réciproquement, le deuxième terminal mobile UT2 pourra émettre directement à destination du serveur de réseau social SNS tout message de réponse Ans qui devait également transiter par le serveur de programmes TVPS dans le cas de figure précédent. Dans l'hypothèse où une liaison de communication peut être établie entre le deuxième terminal UT2 et le deuxième boîtier-décodeur STB2, les données Dat reçues par le deuxième terminal mobile UT2 pourront être affichées sur le deuxième téléviseur TV2 en vue d'en partager la teneur avec d'autres spectateurs du programme Pg, au sein duquel les informations dont les données Dat sont représentatives seront intégrées par le deuxième boîtier-décodeur STB2, par exemple en mettant en oeuvre une technique de multiplexage déjà évoquée plus haut, ou encore par transmission des données à un composant d'interface graphique de type « widget » (contraction bien connue des termes anglais « window » et « gadget ») implantée au niveau du deuxième téléviseur TV2.

Dans un autre mode de mise en oeuvre de l'invention, les données Dat pourront en outre être transmises directement au deuxième boîtier-décodeur STB2 par le serveur de réseau social SNS qui aura préalablement mémorisé une adresse propre à ce deuxième boîtier-décodeur STB2.

Enfin, si les premier et deuxième terminaux mobiles UT1 et UT2 ont été ici représentés sous forme de téléphones mobiles, ces terminaux pourront revêtir d'autres formes dans d'autres modes de mise en oeuvre de l'invention, et être par exemple matérialisés par des tablettes multimédia, des ordinateurs portables, etc.

## Revendications

1. Procédé de communication entre un premier utilisateur d'un équipement de restitution de flux audiovisuels d'un premier type et des utilisateurs d'équipements distants de restitution de flux audiovisuels, **caractérisé en ce qu'**il inclut une étape d'émission automatique à destination d'au moins l'un desdits équipements distants, d'informations de situation relatives à un contexte dans lequel se trouve un équipement d'un deuxième type dont dispose ledit premier utilisateur, lesdites informations de situation incluant des données relatives à un mode de fonctionnement dans lequel se trouve l'équipement du premier type.

2. Procédé selon la revendication 1, **caractérisé en ce qu'**il inclut en outre une étape de restitution, sur au moins un équipement de restitution de flux audiovisuels distant, d'informations saisies par le premier utilisateur au moyen de l'équipement du deuxième type.

3. Procédé selon la revendication 2, **caractérisé en ce que**, l'équipement du deuxième type étant muni d'un microphone, les informations saisies par le premier utilisateur en vue de leur restitution sur un équipement distant incluent des signaux sonores.

4. Procédé selon la revendication 1, **caractérisé en ce qu'**il inclut en outre une étape de restitution, sur ledit équipement de restitution du premier type, d'informations en cours de restitution sur l'équipement du deuxième type.

5. Système de télécommunication incluant un équipement de restitution de flux audiovisuels d'un premier type et des équipements distants de restitution de flux audiovisuels, **caractérisé en ce qu'**il inclut des moyens d'émission automatique à destination d'au moins l'un desdits équipements distants, d'informations de situation relatives à un contexte dans lequel se trouve un équipement d'un deuxième type associé à l'équipement du premier type, lesdites informations de situation incluant des données relatives à un mode de fonctionnement dans lequel se trouve l'équipement du premier type.

6. Terminal de communication associé à un premier équipement de restitution de flux audiovisuels et incluant des moyens d'émission à destination d'au moins un équipement distant, d'informations de situation relatives à un contexte dans lequel se trouve ledit terminal, lesdites informations de situation incluant des données relatives à un mode de fonctionnement dans lequel se trouve le premier équipement de restitution de flux audiovisuels.

7. Programme d'ordinateur **caractérisé en ce qu'**il comprend des instructions de code de programme pour la mise en oeuvre d'une étape d'émission incluse dans un procédé selon l'une quelconque des revendications 1 à 4 lorsque ce programme est exécuté par un processeur.
